(19) Europäisches Patentamt
European Patent Office
Office européen des brevets

(11) **EP 3 229 534 A1**

(12) **EUROPEAN PATENT APPLICATION**

(43) Date of publication:
**11.10.2017 Bulletin 2017/41**

(51) Int Cl.:
*H04W 64/00* (2009.01)     *G01S 5/02* (2010.01)
*H04W 4/02* (2009.01)      *H04W 84/18* (2009.01)

(21) Application number: **16164331.7**

(22) Date of filing: **07.04.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Sensewhere Limited
Edinburgh EH9 1PJ (GB)**

(72) Inventor: **ARSLAN, Tughrul Sati
Edingburgh, EH9 2PY (GB)**

(74) Representative: **Alistair Hindle Associates Limited
66 Hanover Street
Edinburgh EH2 1EL (GB)**

(54) **POSITION ESTIMATION**

(57)     A mobile user device reads a permanent identifier, such as a MAC address, and at least customisable identifier of a group of beacons from a beacon. Subsequently at least one customisable identifier is transmitted to a second mobile user device which uses that data to obtain signal measurements from the beacon which it could not otherwise obtain. The position of the second mobile user device can therefore be estimated and a positioning database updated. The second mobile user device may execute iOS (iOS is a trade mark of Apple, Inc.) and the second identifier may be a ProximityUUID.

Fig. 1

## Description

<u>Field of the invention</u>

The invention relates to the field of estimating the position of mobile devices which comprise radio transceivers and one or more processors, for example mobile phones, personal digital assistants, laptop computers, tablet computers, wearable devices (e.g. glasses, shoes, watches) and drones having radio transceivers, by the measurement of signals from electromagnetic signal sources, such as wireless access points and other radio-frequency beacons. More particularly, the invention relates to maintaining and updating databases of positioning data for use in such systems where, for at least some mobile devices, at least some of the signal sources are usable for positioning by the positioning system only through an interface which is restricted.

<u>Background to the invention</u>

It is known to provide a positioning system in which mobile devices make measurements of electromagnetic signals from electromagnetic signal sources, for example radio signals from wireless access points and other radio-frequency beacons. These measurements are processed with reference to a database of positioning data concerning signal sources and in some embodiments, expected signals from those sources to thereby enable an estimate of the position of mobile devices to be made. The position estimate may be made locally on the mobile device, or by a server, or a combination thereof. This positioning data is maintained in the form of a database concerning signal sources distributed across a wide geographic area. Measurements of signals from signal sources, or data derived therefrom, are fed back to a central positioning system controller which can use that data to update the at least one database, for example adding or removing signal sources. This approach to maintaining a positioning system database, using measurements from individual mobile devices, has been referred to as crowd sourcing. Furthermore, WO 2011/077166 (Arslan et al.) discloses an arrangement in which initial estimates of the position of signal sources are improved using subsequent measurements of signals from those sources by individual mobile devices and which is especially useful for applications such as indoor positioning where satellite positioning systems are inaccurate or non-functional.

It is known to deliberately place electromagnetic signal sources (beacons) at specific known locations to facilitate position detection and optionally to trigger specific actions when they are detected by mobile devices. For example, an application executed on a mobile device might cause an advertisement to be displayed or another action to be carried out when the mobile device detects signals from a specific electromagnetic signal source and so it can be inferred that the mobile device is proximate to that signal source. These signal sources may for example be beacons according to the Bluetooth Low Energy (BLE, or "Bluetooth Smart") specification. (Bluetooth is a trade mark of Bluetooth SIG, Inc.) Bluetooth beacons currently broadcast UHF radio waves in the 2.4 to 2.485HGz frequency range.

Many beacons according to the BLE specification, and other signal sources (for example WiFi access points) broadcast their MAC address (Media access control address) wirelessly. At the present time MAC addresses are formed according to one of three specifications, MAC-48, EUI-48 and EUI-64. They comprise an organisationally unique identifier and additional data. Blocks of MAC addresses are allocated to manufacturers by the IEEE Registration Authority and manufacturers allocate individual identifiers from within blocks of address to specific devices, such that each device which may be a network node has a unique MAC address. A MAC address is a permanent address in that it is burnt into devices during manufacture (e.g. written to an EPROM memory of the device); it is typically not customisable or dynamically reprogrammable by the end user of a device.

The broadcast of MAC addresses by signal sources facilitates positioning systems. For example, a positioning database may specify the MAC address of a plurality of signal sources, an estimate of the location of the respective signal sources, and the transmission strength of signals from the respective signal sources. This makes it possible to estimate the position of a mobile device by processing the MAC addresses of signal sources detected by the mobile device, and the measured strength of signals from those sources, in combination with the position and transmitted signal strength data stored in the positioning database. In alternative known technologies, measurements of the timing of signals from a mobile device to a signal source and/or vice versa (for example time of flight or round-trip delay time), are used to estimate the distance of a mobile device to each of a plurality of signal sources, again enabling an estimate of the position of the mobile device using stored estimates of the position of the signal sources.

However, measurements of signals from some signal sources which are potentially usable for positioning are accessed through restricted interfaces, meaning that they cannot be used for the estimation of the position of a mobile device unless some specific configuration data is provided. For example, at the present time, iBeacon signal sources, specified by Apple, Inc. (iBeacon is a trade mark of Apple, Inc.) are potentially usable for positioning by all mobile devices but applications running on iOS mobile devices, for example iOS9.2 (iOS is a trade mark of Apple, Inc.) may only obtain data concerning the presence and/or strength of signals from iBeacon signal sources from the operating system if they first provide a parameter, referred to as proximityUUID, to an API of the operating system, using the iOS CoreLocation framework. The proximityUUID value is set by the proprietor of the iBeacon (and should be unique for individual proprietors), along with so-called major and minor values which are not unique to individual proprietors but may for example be used to indicate iBeacon signal sources at a certain type of location (e.g. a certain floor of a building, or certain type of department of a shop) and which can be combined with the proximityUUID to give a unique identifier of an individual iBeacon. Accordingly, with knowledge of the applicable proximityUUID, an application may obtain data concerning the strength of signals received from an iBeacon signal source, but without this identifier datum, it cannot. The proximityUUID, major and minor value, are examples of customisable identifiers, which are not usually burned into a signal source device at manufacture but set by an end user and potentially changed if and when required. The proximityUUID is an example of what is referred to herein as a group identifier, which is a customisable identifier allocated to a group of signal sources.

Restricted interfaces present a problem in that they cannot be used to estimate the position of some mobile devices unless some specific configuration data is available (e.g. a group identifier, proximityUUID etc). They also restrict the availability of measurements of signals from these signal sources which would otherwise be useful to maintain a database of positioning data, for example it may be difficult to add these signal sources to a database of signal sources, or to use measurements of signals from those sources for other database maintenance functions such as checking the integrity of the at least one database, or optimising the estimated positions of individual signal sources using measurements form mobile devices (for example as disclosed in WO 2011/077166 (Arslan et al.)).

The present invention aims to address these problems and/or to mitigate the problems presented by restricted interfaces for reading data from signal sources on positioning systems which use data concerning signals sources which is obtained at least in part from crowdsourcing.

Summary of the invention

According to a first aspect of the invention there is provided a method of compiling positioning data in at least one database, the positioning data relating to a plurality of electromagnetic (typically radio) signal sources and comprising, for each electromagnetic signal source, a first identifier of the electromagnetic signal source, data concerning the position of the electromagnetic signal source or signals therefrom, and, for at least some of the electromagnetic signal sources, at least one second identifier of the respective electromagnetic signal source, the method comprising:

receiving electromagnetic signals from an electromagnetic signal source (first electromagnetic signal source) at a (first) mobile device, the (first) mobile device comprising an electromagnetic signal (typically radio) receiver, at least one processor and memory, processing the received electromagnetic signals to thereby determine both a first identifier of the (first) electromagnetic signal source and at least one second identifier of the (first) electromagnetic signal source,

transmitting the at least one second identifier from the mobile device to a positioning system controller and storing the at least one second identifier in the at least one database relatably to the first identifier of the (first) electromagnetic signal source.

The at least one first identifier of the (first) signal source may also be transmitted to the positioning system controller. However, it may already be known in which case this is not required.

Thus, as well as first identifiers of signal sources (e.g. MAC addresses), the invention enables one or more second identifiers of signal sources (e.g. ProximityUUIDs) to be compiled in at least one database, relatably to those first identifiers.

According to a second aspect of the invention there is provided a method of estimating the position of a (second) mobile device, the (second) mobile device comprising an electromagnetic signal (typically radio) receiver, at least one processor and memory, and a program module (for example a positioning application) comprising executable instructions stored in the memory,

the method comprising obtaining (for example making) an initial estimate of the position of the (second) mobile device and in dependence on the initial estimate of the position of the (second) mobile device transmitting configuration data relating to at least one electromagnetic signal source from a positioning system controller to the program module,

the at least one processor executing the program module and as a result processing the configuration data and obtaining measurements of signals received by the signal receiver from one or more specific electromagnetic signal (typically radio signal) sources, or data derived therefrom,

wherein the configuration data comprises data required by the program module to obtain said measurements or data derived therefrom, and processing the said measurements or data derived therefrom and positioning data which specifies positions of specific electromagnetic (typically radio) signal sources of signals therefrom, to thereby estimate the position of the (second) mobile device.

The configuration data may comprise at least one said second identifier. The configuration data may be selected from a plurality of configuration data sets dependent on at least one said second identifier. By transmitting configuration data to the program module we refer to transmitting configuration data to the (second) mobile device such that it is accessible to the program module when executed by the processor.

The configuration data may be required for the program module to obtain said measurements or data derived therefrom through an interface. The interface may be an application programming interface of an operating system of the mobile device. Accordingly, configuration data can be sent to the mobile device to enable the program module to estimate the position of the mobile device or to transmit to a positioning system controller the data which the controller requires to estimate the position of the mobile device (either the measurements, or data derived therefrom, for example estimated distances to one or more signal sources calculated from the measurements).

The initial estimate of the position of the (second) mobile device may be approximate. It requires only to be sufficiently accurate to enable configuration data to be selected which is appropriate for one or more signal sources in an area proximate the (second) mobile device. The method may comprise making the initial estimate. The method may comprise receiving the initial estimate. The initial estimate could be obtained by, for example, receiving data concerning a recent previous position of the (second) mobile device, receiving data concerning a cellular telephone mast or cell in electronic communication with the (second) mobile device, receiving a measurement made by a satellite positioning module of the (second) mobile device, receiving a network address (e.g. an IP address) of the (second) mobile device and querying a database relating network addresses to geographical locations (e.g. relating IP addresses to positions), or receiving an estimate of the position of the (second) mobile device from another positioning system.

The invention also extends to a method comprising building a database of positioning data according to the first aspect of the invention (using data from a plurality of first mobile devices) and then estimating the position of a plurality of (second) mobile devices using the method of the second aspect of the invention. Although we refer to first and second mobile devices herein to refer to mobile devices reading second identifiers from signal sources and devices which are the subject of later position estimates for clarity, these may be the same devices. Some aspects of the invention do not require the (first) mobile device and some aspects of the invention do not require the (second) mobile device.

According to a third aspect of the invention there is provided a method of estimating the position of a mobile device comprising:

receiving electromagnetic signals from an electromagnetic signal (typically radio) source (first electromagnetic signal source) at a (first) mobile device, the (first) mobile device comprising an electromagnetic signal (typically radio) receiver, at least one processor and memory, processing the received electromagnetic signals to thereby determine both a first identifier of the electromagnetic signal source and at least one second identifier of the (first) electromagnetic signal source,

transmitting the at least one second identifier from the (first) mobile device to a positioning system controller and storing the second identifier in at least one database relatably to the first identifier of the electromagnetic signal source, and

subsequently obtaining (e.g. making) an initial estimate of the position of a (second) mobile device, the (second) mobile device comprising an electromagnetic signal receiver, at least one processor and memory and a program module comprising executable instructions stored in the memory,

and in dependence on the initial estimate of the second position of the (second) mobile device, the positioning system controller transmitting configuration data to the program module, the configuration data comprising at least one said second identifier,

the at least one processor of the (second) mobile device executing the program module of the second mobile device and as a result using at least the second identifier to receive measurements of signals received by the signal receiver of the second mobile device from the electromagnetic signal source, or data derived therefrom, and

processing the said measurements, or data derived therefrom, and positioning data relating to a plurality of specific electromagnetic signal sources and comprising for each electromagnetic signal source, data concerning the position of the electromagnetic signal source or signals therefrom, to thereby estimate the position of the second mobile device.

Thus, the first mobile device has obtained data about the signal source which enables the estimation of the position of the second mobile device using electromagnetic signals subsequently received from the signal source by the second mobile radio device (and the positioning data) which would otherwise not be enabled. According to a fourth aspect of the invention there is provided a method of estimating the position of a mobile device comprising:

receiving electromagnetic signals from an electromagnetic signal (typically radio) source (first electromagnetic signal source) at a (first) mobile device, the (first) mobile device comprising an electromagnetic signal (typically radio) receiver, at least one processor and memory, processing the received electromagnetic signals to thereby determine a customisable identifier of the electromagnetic signal source,

transmitting the customisable identifier from the (first) mobile device to a positioning system controller and storing the customisable identifier in at least one database, and

subsequently obtaining (e.g. making) an initial estimate of the position of a (second) mobile device, the (second) mobile device comprising an electromagnetic signal receiver, at least one processor and memory and a program module comprising executable instructions stored in the memory, and in dependence on the initial estimate of the second position of the (second) mobile device, the positioning system controller transmitting configuration data to the program module, the configuration data comprising the customisable identifier,

the at least one processor of the (second) mobile device executing the program module of the second mobile device and as a result using the said identifier to receive measurements of signals received by the signal receiver of the second mobile device from the electromagnetic signal source, or data derived therefrom, and

processing the said measurements, or data derived therefrom, and positioning data relating to a plurality of specific electromagnetic signal sources and comprising for each electromagnetic signal source, data concerning the position of the electromagnetic signal source or signals therefrom, to thereby estimate the position of the second mobile device.

Preferably, the program module of the second mobile device is unable to receive the said measurements of signals received by the signal receiver of the second mobile device from the electromagnetic signal source, or data derived therefrom, from an interface (typically an application programming interface of an operating system of the second mobile device) without providing the said customisable identifier to the interface. Nevertheless, the first mobile device can obtain the said customisable identifier from the electromagnetic signal source. As a result the program module of the second mobile device has been able to obtain measurements of signals received by the signal receiver of the second mobile device from the electromagnetic signal source, or data derived therefrom (despite having a restricted interface) to enable the position of the second mobile device to be estimated, which would otherwise not have been possible.

Optional features of the said customisable identifier of the fourth aspect correspond to optional features set out above and below of the second identifier of the other aspects of the invention. The customisable identifier may be an identifier of a group of signal sources.

According to a fifth aspect of the invention there is provided a method of estimating the position of a mobile device (which may be a said second mobile device) using positioning data stored in at least one database, the positioning data concerning first identifiers of a plurality of electromagnetic signals sources, and positions (geographical locations) of the said electromagnetic signal sources or signals from the said electromagnetic signal sources,

the positioning data further comprising, for at least some of the electromagnetic signal sources, at least one second identifier of the respective electromagnetic signal sources,

the method comprising receiving electromagnetic signals from an electromagnetic signal source, the electromagnetic signal source being identified by at least one said second identifier, using the at least one second identifier to obtain the first identifier of the respective electromagnetic signal source, and using the positioning data concerning the respective electromagnetic signal source and the measurements of electromagnetic signals from the electromagnetic signal source to estimate the position of the mobile device.

According to a sixth aspect of the invention there is provided a method of estimating the position of a mobile device (which may be a said second mobile device) using positioning data stored in at least one database, the positioning data concerning first identifiers of a plurality of electromagnetic signals sources, and positions of the said electromagnetic signal sources, or signals from the said electromagnetic signal sources,

the positioning data further comprising, for at least some of the electromagnetic signal sources, at least one second identifier of the respective electromagnetic signal sources,

the method comprising the mobile device receiving first electromagnetic signals from a first electromagnetic signal source, the first electromagnetic signals comprising a said first identifier of the first electromagnetic signal source but not a said second identifier of the first electromagnetic signal source and concurrently receiving second electromagnetic signals from a second electromagnetic signal source identified by at least one said second identifier, and processing both the first and second electromagnetic signals to estimate the position of the mobile device.

The optional features above and below are optional features of each aspect of the invention.

The positioning data may be stored with the first identifiers and second identifiers in at least one database. The method may comprise maintaining at least one database of positioning data, the positioning data concerning identifiers of a plurality of electromagnetic signals sources, and positions (geographical locations) of the said electromagnetic signal sources, or signals from the said electromagnetic signal sources (e.g. the signals from said electromagnetic signal source expected or measured at specific positions). Typically the identifiers comprise at least a said first identifier of each signal source and, for at least some of the signal sources, at least one second identifier of the respective signal source. The positioning system controller typically comprises one or more processors in electronic communication with data storage storing the at least one database of positioning data.

The signal receiver (of the first and/or second mobile devices) is typically a signal transceiver (e.g. a radio transceiver). The measurements may be measurements of the strength of signals received from one or more specific signal sources. The distance of the mobile device from the one or more specific signal sources may be estimated from the measured strength of electromagnetic (typically radio) signals received by the mobile device from one or more specific signal sources. The measurement may be a measurement of the timing of electromagnetic (typically radio) signals from and/or to the one or more specific signal sources for example, a measurement of time of flight or round-trip delay. The distance of the mobile device from the one or more specific signal sources may be estimated from the time of flight of electromagnetic (typically radio) signals from and/or to the one or more specific signal sources. The distance from the mobile device to one or more specific signal sources may be estimated by the one or more processors of the mobile device, for example by the execution of the program module or by an operating system (comprising operating system program instructions stored in the memory) executed by the at least one processor, or remotely from the mobile device, for example by the positioning system controller (after transmission of the measurements from the mobile device to the positioning system controller).

The position of the (second) mobile device is typically estimated by processing the measurements of signals received by the signal receiver from one or a plurality of specific signal sources and the position of those signal sources (typically specified by the at least one database of positioning data), or of signals from those signal sources (see fingerprint data, below). Estimating position may comprise determining estimates of the distance of the mobile device from one or more signal sources using the said measurements, and the estimates positions of the signal source, and triangulating. The step of estimating the position of the mobile device may be carried out by the one or more processors of the mobile device, for example by the execution of the program module or by an operating system (comprising operating system program instructions stored in the memory) executed by the at least one processor, or remotely from the mobile device, for example by the positioning system controller (after transmission of the measurements from the mobile device to the positioning system controller).

The data derived from the measurements, or the measurements themselves, may be distance measurements, for example where a measurement of the strength or timing of signals has already been converted into an estimated distance of the mobile device from a respective signal source (e.g. by the operating system of the mobile device).

The configuration data, or data derived therefrom, may be transmitted to an interface and the interface provides the said measurements or data derived therefrom responsive thereto. It may be that the configuration data comprises an identifier which must be provided to the interface in order for the said measurements or data derived therefrom to the program module to be received from the interface.

It may be that the at least one processor of the (second) mobile device executes an operating system, (which comprises operating system program instructions stored in the memory). The interface may be an application programming interface of the operating system. It may be that the program module can receive data concerning electromagnetic signals received from electromagnetic signal sources by the electromagnetic signal receiver of the mobile device from the interface in response to providing an identifier. For example, after the program module provides the identifier to the interface it may receive (for example in response to further queries) data concerning electromagnetic signals from electromagnetic signal sources identified by the identifier. It may be that the configuration data comprises an identifier (e.g. of a signal source or a group of signal sources) which the program module provides (typically must provide) to the application programming interface and receives the measurements, or data derived therefrom, from the application programming interface, responsive thereto.

However, it may be that the interface is an interface of the electromagnetic signal receiver or an interface of the respective signal source. For example, it may be that the configuration data comprises data which must be transmitted to the signal source (typically by the electromagnetic signal transceiver of the mobile device) in order to receive an identifier of the signal source, or in order to obtain a returned signal required to make a distance estimate (for example, one or more return signals required to make a time of flight or round-trip delay based position estimate).

The configuration data may comprise the at least one second identifier. The configuration data may comprise one or more customisable identifiers, which may be determined by a controller of one or more signal sources. The one or more customisable identifiers may be stored in rewritable memory. The one or more customisable identifiers may be revised. The one or more customisable identifiers may be temporary identifiers.

The configuration data and/or the at least one second identifier may comprise at least one restricted identifier. The at least one restricted identifier may be required before an interface (e.g. an application programming interface) provides data concerning a specific signal source (e.g. the strength or timing of measured signals from the specific signal source, or data derived therefrom, such as an estimate of distance to the signal source, or an identifier of the specific signal source). The at least one restricted identifier may be at least one identifier to which a signal source responds or which a signal source broadcasts only responsive to receipt of authorisation data (e.g. from the mobile device).

It may be that the at least one or more customisable identifier and/or at least one second identifier comprises a customisable identifier of a group of signal sources (a group identifier), for example a ProximityUUID. (A ProximityUUID is a configurable identifier recognised by the iOS operating system which a signal source controller may allocate to a group of one or more iBeacons). It may be that the at least one or more customisable identifier and or at least one second identifier comprises a customisable identifier of an individual signal source with a specific group identifier (for example, major and minor values).

It may be that a plurality of second identifiers are read from signals from a (first) signal source but that not all of the plurality of second identifiers are sent to a (second) signal source. For example, it may be that the plurality of second identifiers comprises an identifier of a group of signal sources, and that is transmitted to the second electromagnetic signal source, but the plurality of second identifiers also comprises a unique identifier of an individual signal source and that is not transmitted to the second signal source, for example, in embodiments where the positioning system controller estimates the position of a mobile device using data transmitted from the mobile device to the positioning system controller, because in such embodiments it is not essential for the (second) mobile user device to be able to uniquely identify the second signal source.

The configuration data may comprise one or more parameters. The configuration data may comprise a password. The configuration data may comprise a decryption key. The configuration data may comprise a token. The configuration data may comprise a digital certificate.

The measurements obtained using the configuration data (e.g. at least one second identifier), or data derived therefrom, may be used to modify (typically, to on average improve) an estimate of the position of one or more signal sources stored in the at least one database of positioning data. The method may comprise using the estimated position of the (second) mobile user device to modify an estimate of the position of one or more signal sources stored in the at least one database of positioning data. Thereby modified estimates of the position of one or more signal sources may be transmitted to the (second) mobile device, or other (third) mobile devices, for use in subsequently estimating the position of the (second) mobile device or another (third) mobile device.

The method may further comprising maintaining at least one database of positioning data, the positioning data concerning identifiers of a plurality of electromagnetic signals sources, signals from the said electromagnetic signal sources, and positions of the said electromagnetic signal sources, or signals from the said electromagnetic signal sources, the method comprising processing the estimated positions of the (second) mobile device and the said measurements, or data derived therefrom, to update data concerning the signal source in the at least one database of positioning data.

By maintaining at least one database of positioning data we include adding new data to a database of positioning data, for example data concerning newly detected electromagnetic signals sources or signals therefrom, or additional data concerning electromagnetic signal sources or signals therefrom, and also revising (e.g. updating or editing) data in the at least one database of positioning data.

The step of using the measurement data to estimate the position of the (second) mobile device may be carried out by the (second) mobile device, or elsewhere. For example the estimate of position may be carried out by the positioning system controller (comprising one or more servers) or distributed between the positioning system controller and the second mobile device. Thus, the measurement data or data derived therefrom, may be transmitted from the second mobile device to a server for processing.

It may be that the first identifier is a permanent identifier of the signal source and the at least one second identifier comprises a customisable identifier of the signal source. Customisable identification data, including customisable identifiers may be changed by the controller of the signal source and is typically stored in rewritable memory. The first identifier may be a unique identifier of the signal source. It may be that the at least one second identifier does not uniquely identify the signal source. The at least one second identifier may be, or may comprise, a customisable identifier of a group of signal sources. The at least one second identifier may comprise a (typically customisable) identifier of a group of signal sources and further identification data (one or more further second identifiers) which in combination with the identifier of a group of signal sources, uniquely identifies the signal source. By a permanent identifier we refer to an identifier permanently stored by a signal source, typically in permanent memory. It may be that the first identifier is a manufacturer set identifier of the signal source and the at least one second identifier is a proprietor set identifier of the signal source.

Nevertheless, the first and second identifiers may each be customisable identifiers of the signal sources. The method may comprise reading a third identifier from the signal source and subsequently transmitting the third identifier to a second mobile device. Thus the method may be used to link data concerning signal sources which have been allocated identifiers by two (or more) independent signal source controllers (e.g. two or more different organisations, companies etc., which are independent of each other).

We refer to a first and second identifiers to distinguish these identifiers. They could also be seen as primary and auxiliary identifiers respectively. They have typically been allocated independently of each other, for example by different organisations. They typically have different formats.

It may be that the first identifier is an openly broadcast identifier which is openly broadcast by the signal source and the at least one second identifier is or comprises a restricted identifier to which the signal source responds or which is broadcast only responsive to the receipt of authorisation data (in this case, from a mobile device).

It may be that the first identifier is an identifier of the signal source allocated by an issuer of globally unique identifiers and at least one second identifier is an identifier of the signal source allocated by a party other than the issuer of unique identifiers, and optionally the first identifier is the MAC address of the signal source and at least one second identifier is a configurable identifier of the signal source, such as an identifier configurable by a manager of the signal source.

It may be that the at least one processor of the (second) mobile device executes both the module and an operating system, the operating system providing an application programming interface to the module through which the module can retrieve data concerning electromagnetic signals received from electromagnetic signal sources by the mobile device, wherein at least one second identifier must be provided by the module to the application programming interface in order for the operating system to provide to the module data concerning measurement of electromagnetic signals received from the signal source identified by the second identifier.

It may be that the operating system is iOS, and the second identifier comprises the proximityUUID, major identifier and/or minor identifier of an iBeacon.

Although the configuration data typically comprises at least one second identifier, the configuration data may comprise additional information. For example, the configuration data may specify one of a number of applications to be used, or parameters to be passed to an application programming interface. The configuration data may comprise a digital certificate or decryption key.

It may be that the mobile device broadcasts at least one second identifier, or data derived therefrom, or other configuration data, to the signal source.

It may be that at least one second identifier of a signal source is revised but the first identifier of the signal source stays the same, and the at least one second identifier related to the respective signal source stored in the at least one database of positioning data relatedly to the first identifier is revised, but the first identifier is not, responsive to a further mobile device detecting that the electromagnetic signals from the signal source comprise both the first identifier and at least one revised second identifier. Thus, the system adapts to changes in at least one second identifier of a signal source without having to add the signal source to the database again, losing other data about the signal source, such as its estimated position.

The electromagnetic signals are typically radio waves, which typically encode and thereby transmit digital data.

The signal sources typically generate (and thereby broadcast) radio waves encoding digital data, which may comprise the MAC address of the electromagnetic signal sources. The signal sources may generate signals in response, or only in response, to received signals. For example, they may generate a signal responsive to a received signal to enable time-of-flight based distance measurement.

The signal sources may comprise Wi-Fi access points (WAPs). The signal sources may comprise Bluetooth low energy (BLE) devices. The signal sources are terrestrial (not orbital satellites). The mobile devices may further comprise global satellite positioning system receivers.

The positioning data concerning a plurality of electromagnetic signal sources typically comprises (first) identifiers of the plurality of electromagnetic signal sources (e.g. MAC addresses). It may comprise properties of the plurality of electromagnetic signal sources, such as the type of the electromagnetic signal sources.

The positioning data may relate to the (typically estimated) geographical locations (e.g. 2D or 3D coordinates, for example latitude, longitude and optionally altitude) of electromagnetic signal sources (such as BLE beacons or WAPs). A mobile device can estimate its position using the position of electromagnetic signals sources and measurements of signals (e.g. measurements of the strength of or timing of electromagnetic signals) from electromagnetic signal sources.

The positioning data may relate to the (expected) strength of signals from electromagnetic signal sources at a plurality of positions (e.g. 2D or 3D coordinates, for example latitude, longitude and optionally altitude). For example, the positioning data may comprise the (expected) strength of signals from a plurality of electromagnetic signal sources at each of a plurality of (2D or 3D) grid locations. This type of positioning data is typically referred to as fingerprint data and is usable with or instead of data concerning the actual position of signal sources. A mobile device can estimate its position from fingerprint data by measuring the signals (typically measurements of the strength of electromagnetic signals) from electromagnetic signal sources, comparing these with the fingerprint data and estimating its positing as the geographical location of the most closely matching fingerprint data, or more typically using interpolation to compute a position intermediate geographical locations in respect of which fingerprint data is stored. The step of comparing measured data with fingerprint data can also be carried out by a server. In a related strategy, the positioning data stores parameters of a function which describes the (expected) spatial variation in the strength of signals from a plurality of electromagnetic signal sources and the mobile device (or a server) processes this data to determine the location that best fits the measured strength of signals from electromagnetic signal sources. The positioning data may concern both the geographical locations of the said electromagnetic signal sources and the geographical location of signals from the said electromagnetic signal sources.

Positioning data from the at least one database of positioning data may be transmitted to a mobile device, for use by the mobile device to determine its position. Positioning data would typically be transmitted selectively, and relate to an area that is proximate to the mobile device, or an expected future location of the mobile device. The mobile device may make measurements of signals from electromagnetic signal sources and transmit these to a server.

Some or all of the mobile devices may be cellular telephones. The mobile devices may comprise one or more processors which execute the Android operating system (for example Android 6.0.1, or later) (Android is a trade mark of Google, Inc.) The mobile devices may comprise one or more processors which execute the iOS operating system (for example iOS 9.2 or later) (iOS is a trade mark of Apple, Inc.). It may be that the plurality of mobile devices comprise at least a plurality of mobile devices comprising one or more processors which execute the Android operating system and a plurality of mobile devices comprising one or more processor which executes iOS operating system.

The electromagnetic signal receivers typically comprise one or more antenna and radio processing circuits configured to receive radio signals and radio signals through the one or more antenna to thereby obtain digital data encoded by the received radio signals.

Some or all of the mobile devices may comprise satellite positioning system modules, which receive signals from orbital satellites during operation and process these signals to estimate the position of the mobile devices. Some or all of the mobile devices may comprise one or more additional sensors, data from which is used to estimate the position of the mobile device. The additional sensors may be selected from a group consisting of: an accelerometer, a gyroscope, a magnetometer, a step counter, a camera. Data from the one or more said sensors may be processed to improve the estimated position of the mobile device and/or the estimated distance from the mobile device to a signal source and/or the estimated position of a signal source.

One or more of the mobile devices may be wearable components, for example watches, glasses, shoes, armbands or contact lenses. The mobile device may comprise a plurality of separate or separable components which are in (typically direct) wired or wireless communication with each other (e.g. a mobile telephone, tablet or computer and a separate or separable wearable component). The stored positioning data may be distributed between more than one said component, or replicated in part in more than one said component.

The positioning system controller may process signals measured by mobile devices, and it uses these measurements to maintain the at least one database of positioning data. For example, measurements of signals from a plurality of electromagnetic signal sources, received concurrently by a mobile device may be used to improve estimates of the position of electromagnetic signal sources, and thereby used to update the at least one database of positioning data appropriately.

Typically, the electromagnetic signal sources are radio signal sources which broadcast radio signals and the electromagnetic signal receivers are radio receivers (usually radio transceivers). However, the mobile devices may measure and process electromagnetic signals received from other electromagnetic signal sources, for example, they may detect visible light communication signals from optical wireless communication sources, in which case the electromagnetic signal receivers may be optical receivers.

According to a seventh aspect there is provided a positioning system controller comprising one or more processors in electronic communication with data storage retrievably storing at least one database of positioning data, the positioning data relating to a plurality of electromagnetic (typically radio) signal sources and comprising, for each electromagnetic signal source, a first identifier of the electromagnetic signal source, data concerning the position of the electromagnetic signal source or signals therefrom, and, for at least some of the electromagnetic signal sources, at least one second identifier of the respective electromagnetic signal source,

the positioning system controller programmed to receive from a plurality of (first) mobile devices both a first identifier of a (first) electromagnetic signal source from which the respective mobile device has received electromagnetic signals and at least one second identifier of the same electromagnetic signal source and, for each of a plurality of electromagnetic signal sources, to store the first identifier and at least one second identifier in the at least one database,

the positioning system controller further programmed to receive an initial estimate of the position of a (second) mobile device and to select data from the at least one database of positioning data in dependence on the initially estimated position of the (second) mobile device and to transmit the selected data to the (second) mobile device, the transmitted data comprising at least one said second identifier of each of a plurality of electromagnetic signal sources.

According to an eighth aspect of the invention there is provided a (second) mobile device, the (second) mobile device comprising an electromagnetic signal (typically radio) receiver, at least one processor and memory, and a program module (for example a positioning application) comprising executable instructions stored in the memory which when executed by the at least one processor cause the mobile device to process electromagnetic signals received by the electromagnetic signal receiver from a first electromagnetic signal source (first electromagnetic signal source) to thereby determine both a first identifier of the (first) electromagnetic signal source and at least one second identifier of the (first) electromagnetic signal source, and to transmit the at least one second identifier from the mobile device to a positioning system controller.

According to a ninth aspect of the invention there is provided a (second) mobile device, the (second) mobile device comprising an electromagnetic signal (typically radio) receiver, at least one processor and memory, and a program module (for example a positioning application) comprising executable instructions stored in the memory which when executed by the at least one processor cause the mobile device to receive from a positioning system controller and to provide to an interface (location dependent) configuration data concerning one or more electromagnetic signal sources, the configuration data comprising data required by the program module to obtain measurements of signals from the respective one or more electromagnetic signal sources, or data derived therefrom, and to retrieve said measurements, or data derived therefrom, from the interface and to process the said measurements, or data derived therefrom to estimate the position of the mobile device and/or to transmit said measurements, or data derived therefrom, to a positioning system controller. According to a tenth aspect of the invention there is provided a positioning system for estimating the position of a plurality of mobile user devices, the positioning system comprising a positioning system controller according to the seventh aspect of the invention and a plurality of mobile devices according to the eighth and/or ninth aspects of the invention. The plurality of mobile device may be mobile device according to both the eighth and ninth aspects of the invention.

The positioning system, positioning system controller, first and second mobile devices and/or program module are preferably configured to carry out the method steps of the first through sixth aspects of the invention. The first and second identifiers, transmitted data and/or measurements are typically as set out above in respect of the first through sixth aspects of the invention. In general, optional features described above in relation to any aspect of the invention are also optional features of each aspect of the invention.

Description of the Drawings

An example embodiment of the present invention will now be illustrated with reference to the following Figures in which:

Figure 1 is a schematic diagram of a system for estimating the position of mobile user devices which include radio transceivers, using radio signals from radio signal sources;

Figure 2 is a schematic diagram of components of a system for estimating the positioning of mobile devices, and maintaining a database of positioning data;

Figure 3 illustrates the data transferred between components of the system when a radio transceiver interface of a mobile device detects a radio signal source which broadcasts its MAC address;

Figure 4 illustrates the data transferred between components of the system when a radio transceiver of a mobile device detects radio signal sources which do not broadcast their MAC address;

Figure 5 illustrates data broadcast by a generic BLE beacon;

Figure 6 illustrated data broadcast by an iBeacon;

Figure 7 illustrates data broadcast by an Eddystone device.

Detailed Description of an Example Embodiment

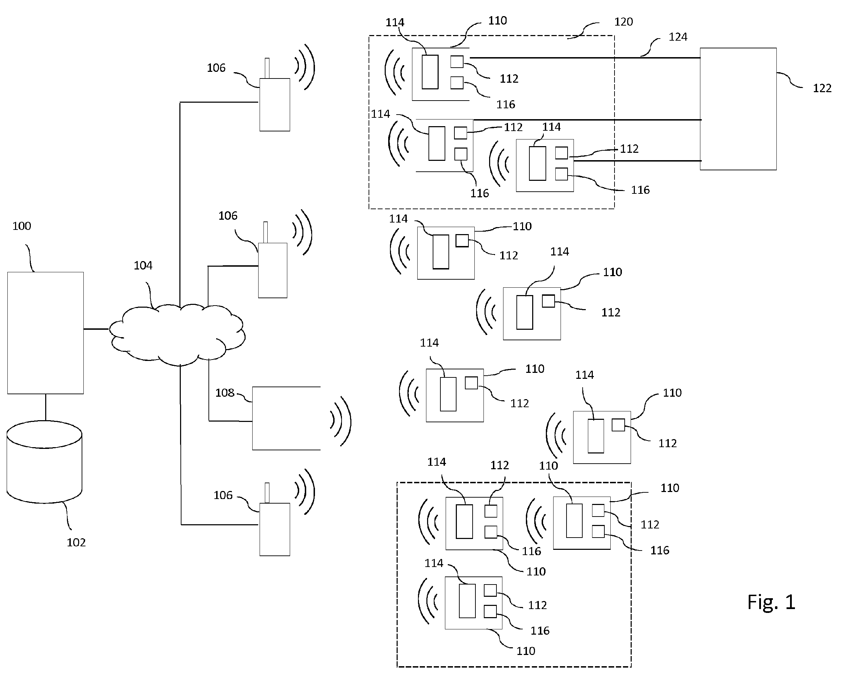

With reference to Figure 1, a mobile positioning system includes a system controller (100), in communication with a stored database of positioning data (102). The controller is formed by one or more servers, and the controller communicates through the internet (104), with a plurality of mobile user devices which comprise radio transceivers, including mobile (e.g. cellular) telephones (106), tablets (108), laptop computers, watches, user-controlled drones, and so forth. The user devices generally communicate with the controller at least in part through a wireless internet connection e.g. through a cellular telephone network (e.g. a 4G network) or Wi-Fi.

The user devices belong to individual users and their movements are outside of the control of the proprietor of the mobile positioning system, although they are programmed to communicate with the controller through the internet. The user devices may be executing a positioning application as shown in the following example, or corresponding functionality may be built partially or wholly into their operating system or other hardware or software components. The mobile devices move across a wide area, such as a city, country, continent or the surface of the Earth, where they will encounter radio signal sources, such as wireless access points (108) and beacons (110), for example iBeacons or other Bluetooth beacons.

The signal sources each have solid state memory comprising both permanent and temporary memory. The permanent memory stores the MAC address (112) of the signal source. The data stored in the temporary memory varies between signal sources and can be changed by the owner of the signal source. In the case of a beacon this may comprise advertisement data (114) which is broadcast during operation and customisable identification data (116). The customisable identification data (in this example functioning as the at least one second identifier) typically comprises a group identifier which is common to a subset of the signal sources. In the case of an iBeacon, the customisable identification data comprises the proximityUUID allocated to the device (which is an example of a group identifier) along with major and minor values (which can be used along with the group identifier to uniquely identify the beacon).

Some of the signal sources are independent of each other. They typically broadcast their MAC address (112). Examples of this type of device are Wi-Fi access points or other wireless LAN access points belonging to individual internet users.

Some of the signal sources are part of group provided by an individual organisation, which has defined the customisable identification data (e.g. group identifier) for a group of signal sources within a geographical region (120). The region is typically a facility such as an airport terminal, shop, or shopping centre, or school, or cinema, or another group of one or more buildings, or even an outdoor environment, such as a town centre, open railway station etc. The signal sources in the group may however be distributed in a plurality of distinct geographical regions, for example, several may be provided in each branch of a store, restaurant, cinema, transport hub etc. owned or managed by the same organisation.

In some embodiments, the signal sources are networked and controlled by a source group controller (122), which is in communication with the signal sources across a network (124), such as a wired or wireless ethernet LAN. In this case the source group controller can automatically update advertisement data and/or customisable identification data stored in the temporary memory of each signal source in the group, potentially providing that data on demand.

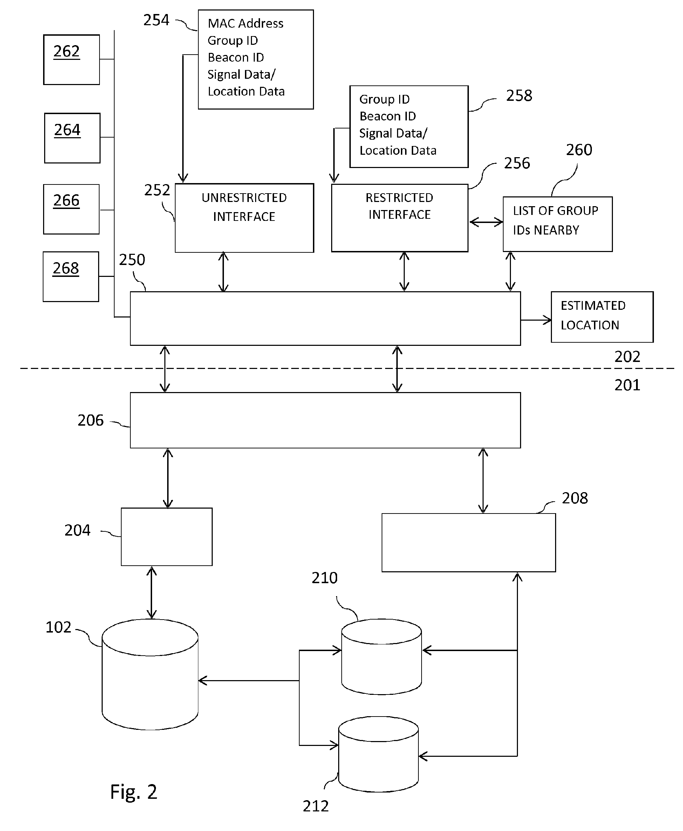

Figure 2 is a schematic diagram of the architecture of a positioning system, which is distributed between server side (201) functionality implemented by the positioning system controller and client side functionality (202) implemented on individual mobile devices.

The controller is typically implemented by a plurality of servers across which the function of the controller is distributed. Different groups of one or more servers may implement the function of the controller for different geographical locations, for example. Each server typically comprises one or more processors executing program code.

The mobile devices include radio transceivers which comprise one or more radio antenna and radio frequency processing circuits. They comprise permanent and temporary memory and one or more processors which execute programs stored in the memory of the respective mobile device, including the positioning application and an operating system. The mobile devices have user interfaces, for example keyboard (262), displays (264), touch screens (266) and/or microphones (268). Some of the mobile devices are cellular telephones, including in an example cellular telephones executing the Android operating system and cellular telephones executing the iOS operating system.

The controller comprises a database of positioning data (102). The database stores data concerning a plurality of signal sources and in an example, the data stored in the positioning database is as follows, for each signal source:

- MAC ID
- Type
- Estimated position [ latitude, longitude, altitude ]
- Level(s) of confidence
- Transmission signal strength
- Environment data
- Recent measurement data concerning the signal source

The MAC ID functions as the first identifier of a respective signal source and enables each respective signal source to be uniquely identified. Where available, an identifier of the type of a signal source (e.g. values indicative of a WiFi access point, BLE beacon, iBeacon, an identifier of a specific manufacturer, product model, category etc.) are also stored. The at least one database stores the best available current estimate of the position of the signal source having that MAC ID. One skilled in the art would appreciate that this may be stored in a format such as latitude, longitude and altitude, or another two dimensional or three dimensional frame of reference, for example, as Cartesian coordinates (x, y, z) at any suitable scale or in a local coordinate system, potentially along with additional position label data, such as labels which refer to the floor of a building, gate of an airport terminal or department of a store (for example) where the signal source is located, whether the location is inside or outside etc. Level of confidence data indicates the level of confidence in the estimated position of the signal source, a level of confidence that the signal source is still present etc. This is calculated during operation of the positioning system, taking into account the number of measurements of the signal source by mobile devices.

Transmission signal strength data indicates a best available estimation of the strength of the signals broadcast by the signal source. Sometimes this is known very accurately, for example if the signal source is known to be of a specific type with a defined signal strength. In other cases, the signal strength is estimated from measurements made by individual mobile devices. This data is not necessary if the signal source broadcasts its signal strength or if the signal strength is controllable (for example as described in WO2013/054144) or if the signal source supports another method of range finding (e.g. round-trip delay measurement). The data may include environment data, such as data indicating which of a number of path loss models (which mathematically describe the reduction in signal strength with distance from the signal source) or one or more parameters of the path loss model should be used when estimating position based on the strength of signals from the respective signal source.

The at least one database also contains additional information for use in further improving the quality of the data and estimates of positions within the at least one database. For example, the data may comprise recent measurements of signals from the signal source, for example measurements of the strength of signals received by mobile devices, or data derived therefrom, such as estimates of the distance between mobile devices and signal sources, along with the time and/or estimated positions of those mobile devices when the measurement were made. This data typically comprises information about signals measured concurrently by the same mobile device from a plurality of signal sources. This measurement data can be processed periodically to improve the data in the at least one database of positioning data, for example to better estimate the position of or strength of signals from individual signal sources. One skilled in the art will appreciate that there is no requirement for a single database to be used for all of this data and that the data structures used to store this data are a matter of choice. Recent measurements for example, may well be stored in a different database to the MAC ID and signal strength data, separate databases may be maintained in relation to different geographical locations etc.

The controller includes a positioning system control program module (204) which retrieves data from the positioning database concerning individual signal sources, and sends it to the positioning applications (250) executed by processors of individual mobile devices, through an interface program module (206). The positioning application may be part of the operating system of the mobile device.

The interface program module (206) transmits data to, and receives data from the positioning applications executed on the individual mobile devices, and also interfaces with identifier management program module (208). The identifier management program module is in electronic communication with a signal source identifier database (210), which stores the proximityUUID, or other second identifier data read from individual signal sources. For example, it may for each of a plurality of signal sources store:

- MAC ID
- ProximityUUID, Major identifier, Minor identifier, or other customisable identification data.

The enables one or more identifiers (second identifiers) of an individual signal source to be related to the (first) identifier of the signal source and vice versa and can be queried to enable data concerning a signal source to be read from the at least one database of positioning data (102) with one or more second identifiers of a signal source but initially without its MAC address. This enables customised identification data (second identifiers) of individual beacons to be associated with MAC IDs. The second identifiers may comprise an identifier of a group of signal sources (e.g. ProximityUUID) and an identifier of an individual signal having that group identifier (eg. Major identifier and Minor identifier if set uniquely).

The identifier management program module (208) is also in communication with a group identifier database (212), which lists group identifiers (e.g. proximityUUID values) of the signal sources which may be encountered in particular geographical regions (e.g. geographical areas, buildings, facilities etc). This data is useful as it enables the list of nearby group identifiers (260) to be transmitted to mobile devices which may encounter those signal sources. The data in the group identifier database (212) can be obtained by processing the signal source identifier database (210) and the at least one database of positioning data (102).

On some mobile devices, for example, typical mobile telephones executing the Android operating system (for example Android 6.0.1, or later) (Android is a trade mark of Google, Inc.), the positioning application (250) is in communication with a radio receiver interface (252), of the mobile device which is unrestricted in the sense that no data specific to individual signal sources is required in order for an application to obtain a measurement of the strength of signals from those sources through that interface. The radio receiver interface may for example comprise an API of an operating system or a device driver through which data may be read which has been received through a radio transceiver of the mobile device. The radio transceiver comprise a mobile radio antenna and radio frequency processing circuit which decodes and outputs data broadcast by the respective signal source in radio signals. Through the interface, the positioning application reads the following data (254) concerning electromagnetic signal sources within the detection range of the mobile device.

- MAC address
- Signal strength
- Additional broadcast data

The MAC address and signal strength are used to estimate the position of the mobile device, as described below. Some measurements may also be used to improve the information in the at least one database of positioning data.

The additional broadcast data varies substantially between signal sources. In the case of an iBeacon or Eddystone beacon (Eddystone is a trade mark of Google, Inc.), for example, the additional broadcast data comprises

- A group identifier
- Further identifier data

The group identifier is shared by a group of signal sources, and functions as the second identifier of a respective signal source. It may be an identifier allocated to an organisation by an allocator of unique identifiers. For an iBeacon, it is the proximityUUID. ProximityUUIDs are allocated to organisations by Apple, Inc. and at the present time must be passed to the iOS CoreLocation framework by an application executed on an iOS device in order that an application may access data concerning signal sources having that ProximityUUID through the operating system, for example, to access the strength of signals from a respective signal source.

The further identifier data is additional identification data, which may comprise data specifying a class of the signal source, a sub-group of the signal source, or an identifier of an individual signal source. For an iBeacon signal source, this further identifier data comprises the major and minor values. Advertisement data broadcast by a signal source may also provide useful to identify a signal source, particularly if it is unique, or at least unique within a relatively wide geographical area, and so can function as second identifier data.

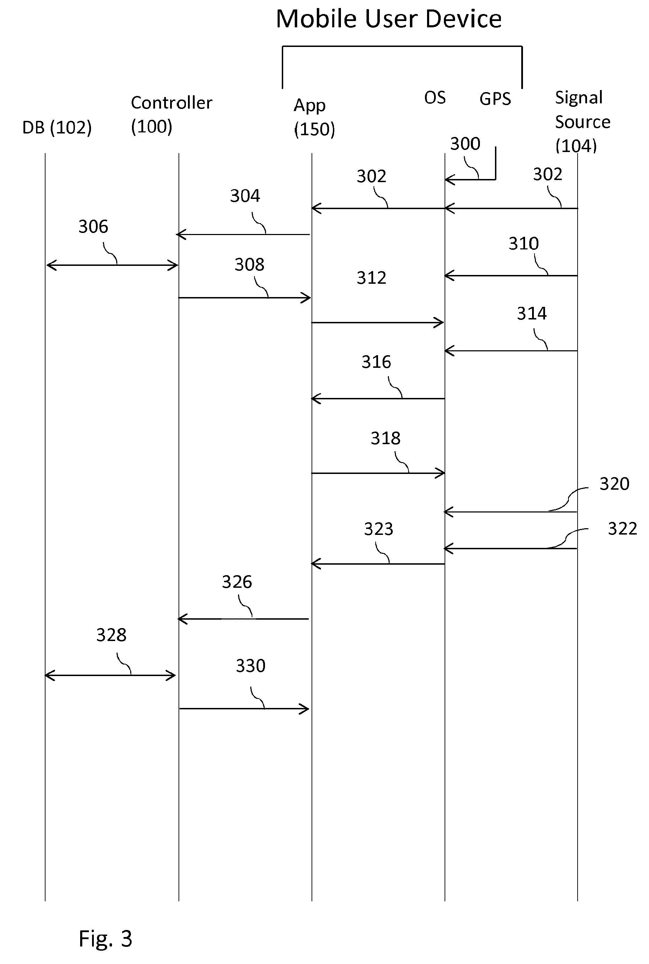

As described below with reference to Figure 3, the group identifier (e.g. ProximityUUID) and further identification data are transmitted by the positioning application to the controller interface program module (206) for later use with mobile devices with restricted interfaces.

On some mobile devices, for example, typical mobile telephones executing the iOS operating system (for example iOS9.2 or later) (iOS is a trade mark of Apple, Inc.), the positioning application (250) is in communication with a radio receiver interface (256), of the mobile device which is restricted in the sense that in order to obtain data from some signal sources from an API of the OS, the application must have specific data, in this case identifiers of signal sources, or groups of signal sources which may be detected by the mobile device. In the case of an iOS device, the position application typically receives and provides to the operating system a list of ProximityUUIDs relating to iBeacons in the area adjacent to the mobile device. This can be implemented by creating a CLBeaconRegion and passing this to the startRangingBeaconsInRegion: or startMonitoringForRegion methods. initWithProximityUUID:identifier can be used to target iBeacons with a specified proximityUUID and related methods initWithProximityUUID:major:identifier or initWithProximityUUID:major:minor:identifier can be used to target iBeacons which further have a specific major identifier, or both a specific major and a specific minor identifier, to further select sub-groups of iBeacons or to target only individual iBeacons. Generally, the controller will provide a list of ProximityUUIDs, or other group identifiers as appropriate, in dependence on an approximate measurement of the position of the mobile device. As beacons are identified, the strength of signals from each is measured and used by the positioning application to estimate the position of the mobile device. Accordingly, the data which is received by the mobile positioning application comprises:

- Group identifier (e.g. ProximityUUID) of detected signal sources
- Other customisable identifier data (e.g. Major and Minor values) of detected signal sources
- Signal strength (or data derived therefrom, e.g. an estimate of the distance to a signal source).

In some implementations the measured signal strength is received by the application from the OS (eg. the measured signal strength is available in iOS 9.2). in other implementations, the OS may provide a distance estimate derived from a signal strength measurement.

Figure 3 illustrates the steps carried out when a mobile device, such as a mobile telephone, watch etc. running an operating system, interacts with signal sources, such as wireless access points (WAPs) and beacons, through an unrestricted interface. The mobile device (first mobile device) estimates its position and obtains data useful to enable positioning to be subsequently carried out for mobile devices which receive data from signal sources through restricted interfaces.

Initially the approximate position of the mobile device is determined by the operating system from a GPS program module (300) of the device. Alternatively, the approximate position of the mobile device can be obtained by reading (302) the MAC address of a signal source within detection range and passing (304) that MAC address to the controller (100) which can estimate the position of the mobile radio transmitter as being within a detection range of the position of the signal source with that MAC address, with reference to the positioning data in the at least one database of positioning data (102). This initial position estimate need not be very accurate.

Using the approximate position of the mobile device, the controller queries (306) the at least one database of positioning data to obtain the following data concerning signal sources in an area around the mobile device (where available) and transmits (308) some or all of this data to the positioning application of the mobile device.

- MAC ID
- Type
- Estimated position
- Level(s) of confidence
- Signal strength
- Environment data

The operating system of the mobile device periodically detects (310) signal sources using wireless radio frequency interfaces such as WiFi or Bluetooth interfaces. Responsive to a query (312) from the positioning application for data (314) concerning currently detectable signal source, the positioning application is provided (316) with the following data concerning each detectable signal source:

- MAC ID
- Measured signal strength
- Additional broadcast data

The positioning application uses the MAC ID data and measured signal strength, in combination with the data received from the controller concerning each detected signal source, to estimate the location of the mobile device and to output (318) the estimate location, for example to the operating system, to other applications, to a display of the mobile device, for example on a screen showing a map, etc.

One skilled in the art will be aware of various known techniques for estimating the position of a mobile device using the strength of radio signals from signal sources. For example, the positioning application may calculate the distance of the mobile device from each of the signal sources which can be detected using the following formula:

$$P_r = \frac{P_t G_t G_r \lambda^2}{(4\pi)^2 d^2} \tag{1}$$

where $P_r$ is the received signal power at the user device, $P_t$ is the transmitted power of the signal source, $G_r$ and $G_t$ are the receiver and transmitter gains respectively, $\lambda$ is the signal wavelength and d is a distance between source and receiver.

This function may alternatively be expressed in terms of propagation gain (PG) as:

$$PG = \frac{P_r}{P_t G_t G_r} = \frac{\lambda^2}{(4\pi)^2 d^2} \tag{2}$$

and in decibels form as:

$$PG_{dB} = 20 \log (\lambda/4\pi d) \tag{3}$$

Typically, all of the parameters of the above equations, apart from distance, d, are known to the mobile device either from the data measured from the signal sources or from the locally stored positioning data received from the controller. Accordingly, the mobile device may determine its distance, d, from a given signal source using the above equation.

The above equation is useful for a free space environment, but may not be sufficiently accurate for use in "real world" indoor environments such as tunnels or shopping centres. An alternative equation for use in such indoor environments may be:

$$PG_{dB} = 20 \log (\lambda/4\pi d_0) + 10n\log(d/d_0) + X_\sigma \qquad (4)$$

where $X$, $n$ and $d_0$ are parameters which vary with different indoor environments and which can be determined empirically. These parameters may be received from the data stored in the at least one database of positioning data, for a particular region or for the detection of a particular signal source.

By processing the known positions of signal sources together with the distances calculated from each signal source, the position of the mobile device can be estimated by, for example, triangulation.

To further improve these estimates, the positioning application may use data from one or more other sensors built into the mobile device such as a GPS positioning program module (260), a compass (265), an accelerometer (266), a camera (268) etc. For example, it may use changes in the position estimate from a GPS program module, changes in orientation measured by a compass and a number of steps taken by a user calculated by a pedometer program module using the accelerometer to estimate the direction and distance of movements of the user device and to process that along with past estimates of position to estimate current position.

Over time, numerous measurements of signals from signal sources are made by numerous mobile devices (302, 310, 314, 320, 322). These measurements are obtained by the positioning application and transmitted (326) to the controller. The controller uses these measurements to improve (328) the data stored in the at least one database of positioning data, for example to:

- Add new signal sources
- Delete signal sources
- Update estimates of the position of signal sources
- Update level(s) of confidence
- Update estimates of the transmission power of the signal source

Estimates of the position of signal sources can be updated by processing the estimated positions of mobile devices at each of a plurality of measurements of a signal source along with the estimated distance from the respective mobile device to each signal source when each measurement occurs. Over time, such updates make an overall improve in the estimates of the position of signal sources, by iteration. In practice, only some measurements of signals from signal sources are used to estimate the position of signal sources, to avoid excessive data collection and transmission, for example, measurements may be transmitted only for signal sources which are not previously known or where confidence in the estimated position of that signal source is below a threshold.

The improved positioning data can subsequently be transmitted (330) to the same or other mobile devices to gradually improve the quality of the positioning data over time.

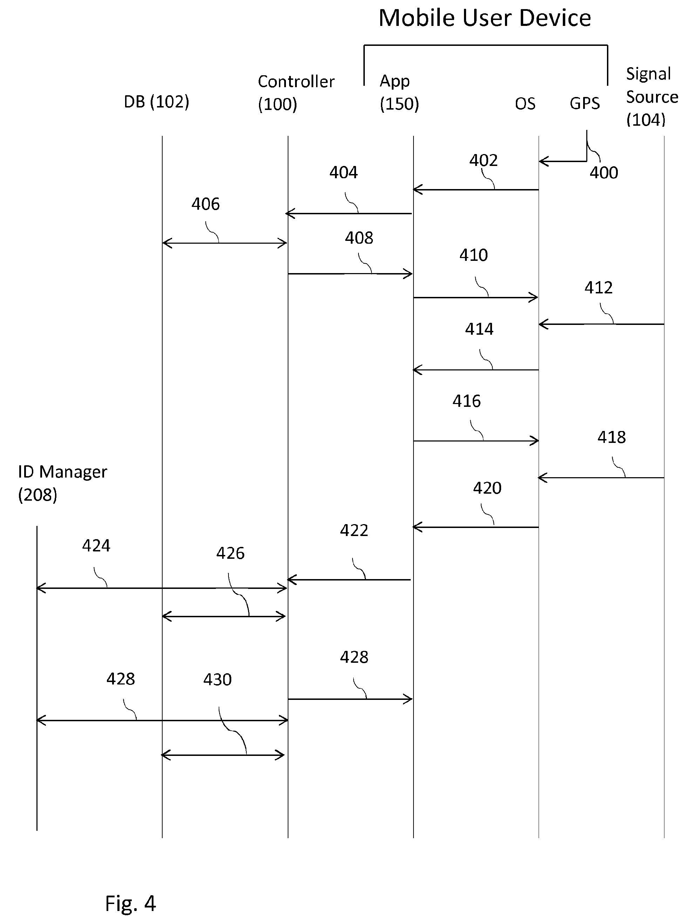

Figure 4 illustrates the procedure which is carried out to estimate the position of a (second) mobile device using measurements of radio signals from signal sources through a restricted interface. In this example, the restricted interface is the API of an operating system, in particular iOS. It is necessary for the positioning application to have data (such as proximityUUID in the case of iOS where the signal source is an iBeacon) in order to obtain measurements of the strength of signals from individual signal sources and/or their MAC addresses through the API of the opening system. (it may be physically possible for the application to obtain this data other than through the operating system, but only in violation of an operating system usage policy).

The procedure begins as before with an initial estimate of the position of the mobile device by other means, such as using a GPS program module (400). This approximate position is retrieved (402) by the positioning application (250) from the operating system and transmitted (404) by the application to the controller, through the internet. The controller then queries (406) the at least one database of positioning data and the group identifier database (212), to receive information about the group identifiers of signal sources in the general area of the respective mobile device. Data concerning those signal sources is transmitted (408) from the controller to the positioning application. This data includes their estimates position and identifiers, such as their ProximityUUID, major value and minor value (in the case of an iOS device).

However, in contrast to the example of Figure 3, in order to retrieve data about the signal sources from the operating system, the application must provide (410) the group identifier (ProximityUUID in the case of an iBeacon) to the operating system. The operating system then reads (412) data from signal sources and, if a signal source is detected, a measurement of the strength of signals, or data derived therefrom such as for example an estimate of the distance from the mobile device to the signal source, is passed (414) to the application. This enables the application to estimate the position of the mobile device, for example using triangulation from detected signal sources. Further measurements of signal sources can be requested (416) or equivalently, events generated when signal source measurements take place can be processed. Data concerning further measurements (418) of signal sources, including either the strength of signals or data derived therefrom, are again received by the positioning application (420), and transmitted (422) to the controller.

The controller interface program module (206) receives this data, queries (424) the signal source identifier database (210) to retrieve the MAC ID of each signal source which has been identified. This then enables the controller to query (426) the at least one database of positioning data (102) to retrieve data concerning the specific signal sources. As the mobile device move, further data concerning signal sources in an area towards which the mobile devices moving, or as expected to move, is transmitted (428) to the positioning application.

Separately, the measurements received from the mobile positioning application can be used by the controller as before to improve the quality of data within the at least one database of positioning data. As the received measurements typically do not include the MAC address of detected signal sources, but instead the major and minor identifiers of those signal sources, or other customisable identification data, the signal source identifier database (210) is again queried (428) to enable the MAC address of each detected signal source to be obtained. Thus, the measurements made by individual mobile devices have been matched up successfully with the MAC address of the respective signal sources, although the MAC address of these signal sources were not readable by the positioning application through the mobile device operating system. Nevertheless, this means that the additional measurements can be to update and improve (430) the data in the at least one database as set out above in respect of step (328). Measurements made by through an unrestricted interface (by the procedure of Figure 3) and through a restricted interface (by the procedure of Figure 4) can therefore be processed together.

Accordingly, as customisable identifier data has been retrieved from signal sources and matched up to the MAC addresses of those signal sources, it has been subsequently possible to use those signal sources to estimate the position of a mobile device through an interface which required the customisable identifier and did not provide the MAC address of detected signal sources. Furthermore, it has also been possible to use the observations made by individual mobile devices to improve the quality of the data in the at least one database, particularly in respect of adding new signal sources, deleting signal sources, and updating estimates of the position of those signal sources.

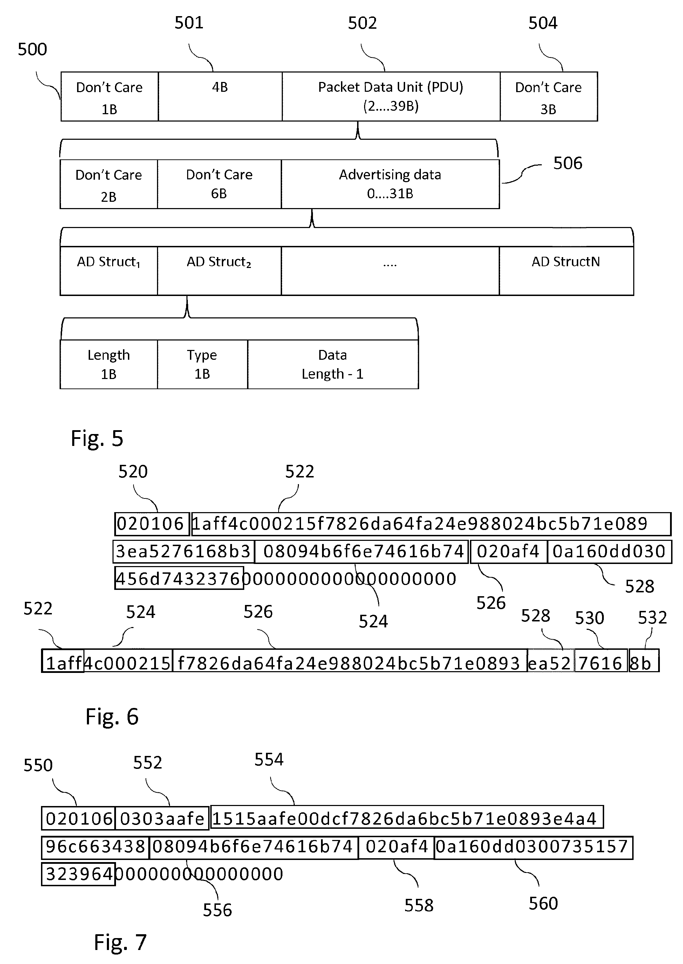

Figure 5 is an example of packets of advertising data currently broadcast by signal sources according to the Bluetooth low energy (BLE) specification (also called Bluetooth Smart or version 4.0+ of the Bluetooth specification), The first five bytes (500, 501) are not relevant for present purposes. The next thirty-nine bytes are a packet data unit (502), and the final three bytes can again be disregarded for present purposes. Within the packet data unit are thirty-one bytes (506) which can be broken up to any number of advertising structures.

Figure 6 illustrates a data packet broadcast by an iBeacon. This data packet begins with three byte of flags (520), and then a second advertisement segment (522), comprising manufacturing data, a third advertisement segment (524) of nine bytes is the complete local name of a device, a fourth advertisement segment (526) comprises three bytes and specifies the transmission power level. A fifth advertisement section (528), of eleven bytes specifies service data. Within the second advertisement segment (522) are four bytes (524) which specify that this is an iBeacon (i.e. indicate the type of the signal source), sixteen bytes specifying the proximityUUID (526), two bytes specifying the major identifier (528), two bytes specifying the minor identifier, and a single byte specifying the signal transmission strength.

For comparison, Figure 7 shows an example of advertisement data broadcast by an Eddystone beacon (Eddystone is a trade mark of Google, Inc.). The advertisement data can be read by an application without requiring any data specific to the individual signal source. Again, the advertisement segment begins with three bytes of flags (550), there is then an advertisement segment (552) of four bytes giving a complete list of 16 bit service class UUIDs, twenty-two bytes of service data (554), the complete local name of the device in nine bytes (556), the transmission power level (558) and then service data (560).

<u>Variations</u>

In the above example, the restricted interface was an interface of an operating system. An application running under iOS 9.2 at the present time cannot obtain data concerning the strength of signals from iBeacons without providing the ProximityUUID of the iBeacon. The operating system could obtain that data if it was programmed to do so. In other examples, the interface which is restricted may for example be an interface of the signal source or a hardware interface of the mobile device. For example, in some embodiments, data must be transmitted by the mobile device to a signal source in order to obtain data required for positioning, for example, an identifier of the signal source, or the mobile device and signal source must complete an authorisation protocol for which the mobile device must have specific configuration data, for example, a password, digital certificate, shared secret etc. For example, the signal source may transmit a random MAC ID until specific data is provided to it whereupon it may provide a specific identifier enabling it to be identified and the applicable data from the at least one database of positioning data to be used. The signal source may transmit encrypted data and the configuration data held by the mobile device may be a decryption key required to obtain a second identifier enabling it to be identified and the applicable data from the at least one database of positioning data to be used.

Accordingly, the configuration data which is sent to a mobile device can comprise a digital certificate, password, program code, or other data useful to enable specific signal sources to be identified and used for positioning.

In the examples described above, the mobile devices estimate their own position using measurements of the strength of signals from signal sources or data derived therefrom (for example, estimates of the distance from the mobile device to a specific signal source, calculated by the operating system of the mobile device from the strength of measured signals from the signal source), and data concerning the estimated locations of those signal source. However, this is by no means the only possible approach. It is equally possible for measurements of signal strength or data derived therefrom, which are made by the mobile devices to be transmitted to the controller, and the controller may estimate the position of the mobile devices and either transmit this data back to the mobile devices, or employ it in other applications where the position of the mobile device is important.

Furthermore, in the above examples, position estimates are calculated from data concerning estimated positions of signal sources, and the strength of signals transmitted by the signal sources. It is also known in the art to estimate the position of a mobile device using so called fingerprint data which is data concerning the strength of signals from particular signal sources, identified by their MAC address, at different locations, for example at each of a grid of locations, spaced apart by a short distance (e.g. 10 m or 20 m). It is possible for the positioning application to compare measurements of the strength of signal sources with that fingerprint data, and to estimate the position of the mobile device by interpolation between the locations of the fingerprints which most closely correspond. It is also being proposed to estimate position by comparing the measured strength of signals from signal sources with a functioning specifying how these strengths are expected to vary through space. In this case it is necessary only to pass one or more parameters from the controller to individual mobile devices. This is described for example in US 20140243015, the contents of which are incorporated herein by virtue of this reference.

With both fingerprints and parameter fitting, data including the at least one database of positioning data can maintain the same data as described above, that is to say the estimated position and transmitted signal strength of plurality of signal source, but in this case the data which is transmitted to the positioning application is different and does not include the position of signal sources. Instead data is transmitted about signal strength at different position or the variation in signal strength until position.

Still further, although the above examples use measurements of the strength of signals from signal sources, it is possible to instead measure timing of signals from a mobile device to a signal source and/or back again. Examples include measurements of round-trip time delay (the time required for a signal to be transmitted from a circuit of the mobile device to the signal source and a response signal received by the circuit, including hardware delay, and/or vice versa). These are also measurements of signals from signal sources which can be used instead of measurements of signal strength. The distance of a signal source from a mobile device is proportional to the time of flight of signals therebetween which can be determined from round-trip time delay after allowing from processing time delays. In these cases the configuration data might comprise data which must be provided to an API of an operating system as described above and/or data which must be provided by a mobile device to a signal source in order to receive a reply signal or other data required for a round-trip time delay measurement (e.g. information about hardware delay times). Other measured signals could be used to estimate distance, for example, measurements of the angle between two spaced apart signal sources (eg. parts of a visual image).

**Claims**

1. A method of compiling positioning data in at least one database, the positioning data relating to a plurality of electromagnetic signal sources and comprising, for each electromagnetic signal source, a first identifier of the electromagnetic signal source, data concerning the position of the electromagnetic signal source or signals therefrom, and, for at least some of the electromagnetic signal sources, at least one second identifier of the respective electromagnetic signal source, the method comprising:

receiving electromagnetic signals from an electromagnetic signal source at a first mobile device, the first mobile device comprising an electromagnetic signal receiver, at least one processor and memory, processing the received electromagnetic signals to thereby determine both a first identifier of the electromagnetic signal source and at least one second identifier of the electromagnetic signal source,

transmitting the at least one second identifier from the first mobile device to a positioning system controller and storing the at least one second identifier in the at least one database relatably to the first identifier of the electromagnetic signal source.

2. A method according to claim 1, wherein the electromagnetic signal receiver is a radio transceiver and the measurements are measurements of the strength of signals received from one or more specific electromagnetic signal sources or measurements of the timing of signals received from one or more specific electromagnetic signal sources.

3. A method of estimating the position of a mobile device comprising compiling positioning data by the method of claim 1 or claim 2, and
subsequently obtaining an initial estimate of the position of a second mobile device, the second mobile device comprising an electromagnetic signal receiver, at least one processor and memory and a program module comprising executable instructions stored in the memory,
and in dependence on the initial estimate of the second position of the second mobile device, the positioning system controller transmitting configuration data to the program module, the configuration data comprising at least one said second identifier,
the at least one processor of the second mobile device executing the program module of the second mobile device and as a result using at least the second identifier to receive measurements of signals received by the signal receiver of the second mobile device from the electromagnetic signal source, or data derived therefrom, and
processing the said measurements, or data derived therefrom, and positioning data relating to a plurality of specific electromagnetic signal sources and comprising for each electromagnetic signal source, data concerning the position of the electromagnetic signal source or signals therefrom, to thereby estimate the position of the second mobile device.

4. A method according to claim 3, the at least one processor executes an operating system, having an application programming interface and the method comprises providing the at least one second identifier to the application programming interface and receiving the said measurements or data derived therefrom responsive thereto.

5. A method according to any one preceding claim, wherein the at least one second identifier comprises an identifier of a group of electromagnetic signal sources.

6. A method according to any one preceding claim, comprising maintaining at least one database of positioning data, the positioning data concerning identifiers of a plurality of electromagnetic signals sources, signals from the said electromagnetic signal sources, and positions of the said electromagnetic signal sources, or signals from the said electromagnetic signal sources, the method further comprising processing the estimated positions of the second mobile device and the said measurements, or data derived therefrom, to update said positioning data in the at least one database of positioning data.

7. A method according to any one of claims 3 to 6, wherein the first identifier is a permanent identifier of the electromagnetic signal source and at least one second identifier is a customisable identifier of the electromagnetic signal source, or a group of electromagnetic signal sources including the electromagnetic signal source, and optionally wherein the first identifier is a MAC address of the electromagnetic signal source.

8. A method according to any one of claims 3 to 7, wherein the first and second identifiers are each customisable identifiers of the electromagnetic signal source, or wherein the method comprises reading a third identifier from the electromagnetic signal source and subsequently transmitting the third identifier to a second mobile device.

9. A method according to any one preceding claim, wherein a plurality of the electromagnetic signal sources are Bluetooth low energy (BLE) beacons, the first identifier is a MAC address of the respective BLE beacon and at least one second identifier is an identifier of a group of BLE beacons.

10. A method according to any one preceding claim, wherein the first identifier is a MAC address, the operating system of the second mobile device is iOS, and the second identifier comprises the proximityUUID, major identifier and/or minor identifier of an iBeacon.

11. A method of estimating the position of a mobile device comprising:

receiving electromagnetic signals from an electromagnetic signal source at a first mobile device, the first mobile device comprising an electromagnetic signal receiver, at least one processor and memory, processing the received electromagnetic signals to thereby determine a customisable identifier of the electromagnetic signal source,
transmitting the customisable identifier from the first mobile device to a positioning system controller and storing the customisable identifier in at least one database, and
subsequently obtaining an initial estimate of the position of a second mobile device, the second mobile device comprising an electromagnetic signal receiver, at least one processor and memory and a program module comprising executable instructions stored in the memory,
and in dependence on the initial estimate of the second position of the (second) mobile device, the positioning system controller transmitting configuration data to the program module, the configuration data comprising the customisable identifier,
the at least one processor of the second mobile device executing the program module of the second mobile device and as a result using the said identifier to receive measurements of signals received by the signal receiver of the second mobile device from the electromagnetic signal source, or data derived therefrom, and
processing the said measurements, or data derived therefrom, and positioning data relating to a plurality of specific electromagnetic signal sources and
comprising for each electromagnetic signal source, data concerning the position of the electromagnetic signal source or signals therefrom, to thereby estimate the position of the second mobile device.

12. A method of estimating the position of a mobile device using positioning data stored in at least one database, the positioning data concerning first identifiers of a plurality of electromagnetic signals sources, and positions of the said electromagnetic signal sources or signals from the said electromagnetic signal sources,
the positioning data further comprising, for at least some of the electromagnetic signal sources, at least one second identifier of the respective electromagnetic signal sources, which second identifier may be a customisable identifier, the method comprising receiving electromagnetic signals from an electromagnetic signal source, the electromagnetic signal source being identified by at least one said second identifier, using the at least one second identifier to obtain the first identifier of the respective electromagnetic signal source, and using the positioning data concerning the respective electromagnetic signal source and the measurements of electromagnetic signals from the electromagnetic signal source to estimate the position of the mobile device.

13. A method of estimating the position of a mobile device using positioning data stored in at least one database, the positioning data concerning first identifiers of a plurality of electromagnetic signals sources, and positions of the said electromagnetic signal sources, or signals from the said electromagnetic signal sources,
the positioning data further comprising, for at least some of the electromagnetic signal sources, at least one second identifier of the respective electromagnetic signal sources,
the method comprising the mobile device receiving first electromagnetic signals from a first electromagnetic signal source, the first electromagnetic signals comprising a said first identifier of the first signal source but not a said second identifier of the first signal source and concurrently receiving second electromagnetic signals from a second electromagnetic signal source identified by at least one said second identifier, and processing both the first and second electromagnetic signals to estimate the position of the mobile device.

14. A positioning system controller comprising one or more processors in electronic communication with data storage retrievably storing at least one database of positioning data, the positioning data relating to a plurality of electromagnetic signal sources and comprising, for each electromagnetic signal source, a first identifier of the electromagnetic signal source, data concerning the position of the electromagnetic signal source or signals therefrom, and, for at least some of the electromagnetic signal sources, at least one second identifier of the respective electromagnetic signal source, the positioning system controller programmed to receive from a plurality of first mobile devices both a first identifier of a first electromagnetic signal source from which the respective mobile device has received electromagnetic signals and at least one second identifier of the same electromagnetic signal source and, for each of a plurality of electromagnetic signal sources, to store the first identifier and at least one second identifier in the at least one database,
the positioning system controller further programmed to receive an initial estimate of the position of a second mobile device and to select data from the at least one database of positioning data in dependence on the initially estimated position of the second mobile device and to transmit the selected data to the second mobile device, the transmitted data comprising at least one said second identifier of each of a plurality of electromagnetic signal sources.

15. A positioning system for estimating the position of a plurality of mobile user devices, the positioning system comprising a positioning system controller according to claim 14 and a plurality of mobile devices, wherein the mobile devices comprise an electromagnetic signal receiver, at least one processor and memory, and a program module comprising executable instructions stored in the memory which when executed by the at least one processor cause the mobile device to process electromagnetic signals received by the electromagnetic signal receiver from a first electromagnetic signal source to thereby determine both a first identifier of the electromagnetic signal source and at least one second identifier of the electromagnetic signal source, and to transmit the at least one second identifier from the mobile device to a positioning system controller,

and/or a plurality of mobile devices comprising an electromagnetic signal receiver, at least one processor and memory, and a program module comprising executable instructions stored in the memory which when executed by the at least one processor cause the mobile device to receive from a positioning system controller and to provide to an interface configuration data concerning one or more electromagnetic signal sources, the configuration data comprising data required by the program module to obtain measurements of signals from the respective one or more electromagnetic signal sources, or data derived therefrom, and to retrieve said measurements, or data derived therefrom, from the interface and to process the said measurements, or data derived therefrom to estimate the position of the mobile device and/or to transmit said measurements, or data derived therefrom, to a positioning system controller.

Fig. 1

EP 3 229 534 A1

Fig. 2

22

# Mobile User Device

Controller (100)

App (150)

OS        GPS

DB (102)

Signal Source (104)

300

302

304

306

302

310

308

312

314

316

318

320

322

323

326

328

330

Fig. 3

# Mobile User Device

|       | Controller | App |     |     | Signal |
| DB (102) | (100) | (150) | OS | GPS | Source (104) |

400

402

404

406

408

410

412

414

416

418

420

ID Manager
(208)

422

424

426

428

428

430

## Fig. 4

500 501 502 504

| Don't Care 1B | 4B | Packet Data Unit (PDU) (2....39B) | Don't Care 3B |
|---|---|---|---|

| Don't Care 2B | Don't Care 6B | Advertising data 0....31B |
|---|---|---|

506

| AD Struct₁ | AD Struct₂ | .... | AD StructN |
|---|---|---|---|

| Length 1B | Type 1B | Data Length - 1 |
|---|---|---|

## Fig. 5

520 522

| 020106 | 1aff4c000215f7826da64fa24e988024bc5b71e089 |
|---|---|
| 3ea5276168b3 | 08094b6f6e74616b74 | 020af4 | 0a160dd030 |
| 456d7432376 | 0000000000000000000 |

528

522 524 526 524 526 528 530 532

| 1aff | 4c000215 | f7826da64fa24e988024bc5b71e0893 | ea52 | 7616 | 8b |
|---|---|---|---|---|---|

## Fig. 6

550 552 554

| 020106 | 0303aafe | 1515aafe00dcf7826da6bc5b71e0893e4a4 |
|---|---|---|
| 96c663438 | 08094b6f6e74616b74 | 020af4 | 0a160dd0300735157 |
| 323964 | 0000000000000000 |

556 558 560

## Fig. 7

Europäisches
Patentamt

European
Patent Office

Office européen
des brevets

## PARTIAL EUROPEAN SEARCH REPORT

Application Number

under Rule 62a and/or 63 of the European Patent Convention.
This report shall be considered, for the purposes of
subsequent proceedings, as the European search report

EP 16 16 4331

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/185919 A1 (GEOSPOCK LTD [GB]) 10 December 2015 (2015-12-10) | 1-8,14,15 | INV. H04W64/00 G01S5/02 |
| A | * page 10, line 17 - page 23, line 10; figures 1-12 * | 9,10 | |
| X | US 2015/334676 A1 (HART BRIAN D [US] ET AL) 19 November 2015 (2015-11-19) | 1,2,5,7,9 | ADD. H04W4/02 H04W84/18 |
| A | * the whole document * | 3,4,6,8,10,14,15 | |
| A | WO 2013/108043 A2 (SENSEWHERE LTD [GB]) 25 July 2013 (2013-07-25) * page 46, line 6 - page 57, line 32; figures 11-20 * | 1-10,14,15 | |

TECHNICAL FIELDS
SEARCHED      (IPC)

H04W
G01S

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Berlin | 2 November 2016 | Eraso Helguera, J |

EPO FORM 1503 03.82 (P04E07)

Europäisches
Patentamt

European
Patent Office

Office européen
des brevets

**INCOMPLETE SEARCH
SHEET C**

Application Number

EP 16 16 4331

Claim(s) completely searchable:
      1-10, 14, 15

Claim(s) not searched:
      11-13

Reason for the limitation of the search:

Claims 1, 11-13  have been drafted as separate independent method claims.
Under Article 84 in combination with Rule 43(2) EPC, an application may
contain more than one independent claim in a particular category only if
the subject-matter claimed falls within one or more of the exceptional
situations set out in paragraph (a), (b) or (c) of Rule 43(2) EPC. This
does not seem to be the case in the present application.
The search has been restricted to the subject-matter indicated by the
applicant in his letter of 28-10-2016 filed in reply to the invitation
pursuant to Rule 62a(1) EPC, that is, the subject-matter of claim 1 (and
its dependent claims).

## ANNEX TO THE EUROPEAN SEARCH REPORT
## ON EUROPEAN PATENT APPLICATION NO.

EP 16 16 4331

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2016

| Patent document cited in search report | | Publication date | Patent family member(s) | | Publication date |
|---|---|---|---|---|---|
| WO 2015185919 | A1 | 10-12-2015 | NONE | | |
| US 2015334676 | A1 | 19-11-2015 | NONE | | |
| WO 2013108043 | A2 | 25-07-2013 | EP | 2805176 A2 | 26-11-2014 |
| | | | US | 2014365488 A1 | 11-12-2014 |
| | | | WO | 2013108043 A2 | 25-07-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011077166 A, Arslan
- WO 2013054144 A
- US 20140243015 A